(19) **Europäisches Patentamt / European Patent Office / Office européen des brevets**

(11) **EP 4 121 717 B1**

(12) **EUROPEAN PATENT SPECIFICATION**

(45) Date of publication and mention of the grant of the patent:
**17.06.2026 Bulletin 2026/25**

(21) Application number: **21718953.9**

(22) Date of filing: **17.03.2021**

(51) International Patent Classification (IPC):
**G01C 19/72** *(2006.01)*

(52) Cooperative Patent Classification (CPC):
**G01C 19/721; G01C 19/72**

(86) International application number:
**PCT/IB2021/052217**

(87) International publication number:
**WO 2021/186357 (23.09.2021 Gazette 2021/38)**

(54) **SEMI-FINISHED PRODUCT FOR THE CONSTRUCTION OF A GYROSCOPE AND GYROSCOPE INCLUDING THE SEMI-FINISHED PRODUCT**

HALBZEUG ZUR KONSTRUKTION EINES GYROSKOPS UND GYROSKOP MIT DEM HALBZEUG

PRODUIT SEMI-FINI DESTINÉ À LA CONSTRUCTION D'UN GYROSCOPE ET GYROSCOPE COMPRENANT LE PRODUIT SEMI-FINI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2020 IT 202000005710**

(43) Date of publication of application:
**25.01.2023 Bulletin 2023/04**

(73) Proprietor: **Civitanavi Systems S.p.A.**
**63821 Porto Sant'Elpidio (FM) (IT)**

(72) Inventors:
• **MORETTI, Angela**
**63828 Campofilone (FM) (IT)**
• **PIZZARULLI, Andrea**
**Civitanova Marche (MC) (IT)**

(74) Representative: **Fiume, Orazio et al**
**Praxi Intellectual Property S.p.A.**
**Corso Vittorio Emanuele II, 3**
**10125 Torino (IT)**

(56) References cited:
US-A1- 2009 015 843   US-A1- 2012 013 912
US-A1- 2015 131 102   US-A1- 2018 259 337

• "Superluminescent diode", 4 March 2020 (2020-03-04), XP002801130, Retrieved from the Internet <URL:https://en.wikipedia.org/w/index.php?title=Superluminescent_diode&oldid=943806781> [retrieved on 20201116]

## Description

## Field of application of the invention

The present invention relates to the field of gyroscopes based on Sagnac effect and made by means of a MIOC (Multifunctional Integrated Optical Circuit) and an optical fiber coil which acts as a waveguide to the input optical source.

## State of the art

The gyroscope is a key sensor in modern navigation systems with a broad spectrum of applications. The fiber-optic gyroscopes (FOG) have some advantages compared to mechanical gyroscopes, as for example being in a solid state, with a lower weight, small size, lower power consumption, faster ignition timing and greater reliability.

In the late 1960s, the development of the fiber optic gyroscope (FOG) began at the US Naval Research Laboratories, Washington (USA). Today FOG is a key part of the systems of inertial navigation. The use of optical fibers to make an optical angular velocity sensor was investigated with the hope of reducing costs and increasing accuracy. Fiber optic versions of recent years offer greater sensitivity and reliability than early mechanical devices. The all-fiber optical gyroscope was first proposed in 1980 as an implementation of an interferometric inertial rotation sensor based on the Sagnac effect. FOG have been proposed for the detection of the rotation in a wide range of application areas: reference systems of trim and route (AHRS) for use in inertial measurement unit (IMU), land navigation and registration of wells for use in oil and gas exploration field. The emphasis is clearly on developing closed loop systems with a scale factor stability better than 100 ppm. FOGs, accelerometers and FOG-based inertial navigation systems (INS) are part of the integrated sensor systems essential for highly accurate autonomous performance. The closed-path all-optical-fiber guided light source approach resulted in a compact, simplified and stable version. Through the use of low coherence light sources it has been possible to mitigate the effects of phase noise errors resulting from the Rayleigh backscattered light generated in the fiber coil of the optical gyroscope.

One of the most well known FOG realizations is obtained by the use of Multifunctional Integrated Optical Circuit (MIOC) devices that serve to three functions

- Polarizer,
- Splitter,
- Phase modulator.

In particular, MIOC receives a light radiation at its input, polarizing modulating and injecting it into both ends of an optical fiber coil and the outgoing beams are recombined in an interferometric way.

Super-fluorescent light sources obtained from erbium-doped fibers, as a broadband light source, with low coherence and non being polarized, for fiber optic gyroscopes, are known (T. Gaiffe, 2015). The gyroscope obtained includes discrete fiber components spliced with about 26 optical splices to obtain 3 axes.

A fiber optic gyroscope system is known (United States Patent No. 2008/0291459 A1, 2008) which shows a waveguide formed on a substrate coupled to an external 980 nm pump laser acting as a light source. The waveguide is made of doped polymer, which is difficult to obtain. Another problem is related to the fusion junction between the laser diode source and the chip on which wavelength guide is formed. Such structure is so complex that in the event of a malfunction it is very difficult and expensive to understand the causes of the malfunction.

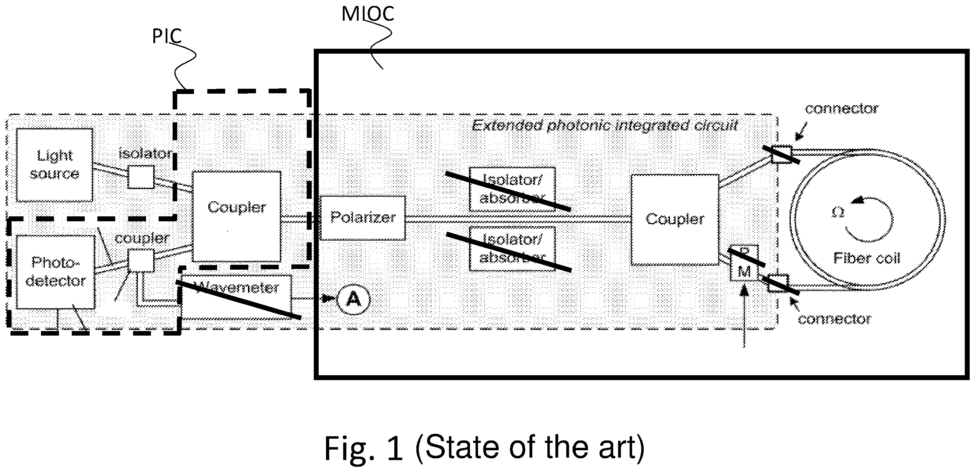

US2018259337 shows other technical solutions. In particular, Figure 1 of the present description corresponds to a portion of Figure 6 of US2018259337. According to this technical solution, a "Light source" is formed in the waveguide chip coupled to the Coupler by means of an isolator. A photo-detector coupled to the Coupler is also formed in the same chip.

On the same chip, there is also a polarizer and an additional Coupler for coupling to an optical fiber using mechanical connectors.

This solution is not very flexible, as the modulation is carried out only on one branch and this involves low system performances and is difficult to debug due to the high number of components integrated in a single component. Figure 1, shown here, has been suitably manipulated to make a face-to-face comparison with the present invention.

Furthermore, for space applications it is essential to have a simple and compact architecture to simplify the creation of hermetic packaging.

If not specifically excluded in the detailed description that follows, aspects described in this chapter are to be considered as an integral part of the detailed description.

## Summary of the invention

The purpose of the present invention is to present an optical fiber gyroscope with a reduced number of components, which is economical and reliable.

The basic idea of the present invention consists in realizing a single device which integrates the light beam source, a chip which exclusively integrates the waveguide, the waveguide adaptation device and in which the photo-detection sensors are hybridized directly into the waveguide in the form of a PIC.

Advantageously, the waveguide becomes a component produced independently of the source of the light beam and of the relative adaptation device. Furthermore, the adaptation device includes components that are selected and assembled at a later time on a common substrate of the TEC "Thermo electric cooler" type, which guarantees an optimal behavior of the device to the thermal variations of all the aforementioned components, although the aforesaid components are not integrated in a single chip as shown in the known art, so furthermore TEC allows to reduce the risk of condensation inside the package, by reducing the sealing specifications. In fact, should a condensation be formed, this would significantly attenuate the optical power output from the SLED.

Preferably, the TEC common sub-mount with its supported components is inserted into a package.

MIOC (s) are optically coupled to the semi-finished product by means of the fibers of a fiber array that pass through the package. Such fibers are optically connected by means of fusion junctions with MIOC (s).

The light beam source is a super luminescent emitting diode (SLED) to generate a polarized light beam and to maintain the polarization of the beam inside the device up to the MIOC, so that the MIOC behaves like a filter in mild polarization towards the light beam. For this reason, MIOC, which is also a separate component and is necessary to make a gyroscope when associated with the present semi-finished product, does not need any absorber filter, which represents a critical aspect when the same light beam source must serve more than a channel as, for example, in the case of biaxial and triaxial gyroscopes.

Therefore, rather than an absorber filter, trenches are used, able to reduce the spurious light inside the photonic chip.

Furthermore, it is believed that the solution of the known art is not suitable for realizing a multiaxial gyroscope, which is instead possible in the proposed architecture object of the patent through the realization of the 1x3 coupler inside the same photonic chip.

Advantageously, the optical coupling between the light beam source and of the chip waveguides is achieved through discrete devices in the air, unlike in the prior art shown. The use of discrete devices in the air allows for greater tolerance on the optical characteristics of the source thus avoiding the re-design of the waveguides and the photonic chip itself in case they should change for example due to obsolescence or particular design requirements. These aspects also contribute to optimizing the performance of the device as it is possible to maintain the polarization state in the air and more than one MIOC can be coupled with a single light beam source. In other words, due to the fact of making a single device including exclusively the aforementioned components, a synergic effect is determined by using a light source of the SLED type, as this allows to maintain the state of polarization of the light beam as generated from the source, before injecting the same light beam into the MIOC (s).

Advantageously, this entails a halving of the energy consumption of the gyroscope, compared to solutions with non-polarized sources, and increases reliability.

Advantageously, a single device allows better performance thanks to the greater thermal stability and to the possibility of having a single optical source, and then with the same Relative Intensity Noise (RIN), capable of providing light for up to three gyroscopes, in order to achieve a triaxial gyroscope.

Hereinafter, the entire semi-finished product S is also referred to as "chip" as it is intended to be enclosed in a separate package with respect to the components defining the MIOC (s).

The realized chip waveguide includes a first MMI (Multi Mode Interferometer Mod) 1x3 splitter and three second 1x2 MMI splitter configured to connect the first splitter with a relative MIOC and this latter with a relative PIC-hybridized photodiode.

The semi-finished product could also be made in a bi-axial version by inserting a 1x2 splitter instead of the 1x3 splitter and two 1x2 splitters instead of three 1x2 splitters. It is also possible to use the same semi-finished product either as a mono-axial or bi-axial one, simply leaving as unused outputs those of the unused axes, suitably terminated, for example by angled fiber outputs.

Preferably, the substrate on which the various components defining the device are formed (glass on silica) and arranged on a TEC is defined from the Anglo-Saxon acronym "Thermo Electric Cooler".

Preferably, the SLED light source and the photodiodes are hybridized either on the glass on silica substrate or on LNOI i.e. lithium niobate on insulator.

Alternatively, it is possible to realize the PIC carrying out the process of manufacturing directly on a single substrate, thus without hybridizing photodiodes, such as InP (indium phosphide), and also the source, that is the photodiodes and the guiding structures, namely the beam splitters.

Advantageously, a strong miniaturization is obtained, given by an integrated PIC photonic chip hybridized with a broadband optical source and photodetectors obtaining triaxial optical fiber gyroscopes which are very stable in terms of temperature and of maintenance of the polarization state and flexible from a design viewpoint.

The embodiments described can facilitate and lead to lower costs regarding series production and stable FOG.

Furthermore, the present solution allows to eliminate components present in the device of the prior art with the consequence that a single light beam source can be used to simultaneously irradiate 3 MIOCs, so realizing a triaxial gyroscope equipped with a single light beam source. This leads to an improved compactness of the resultant of the disclosed embodiments and the presence of TEC underneath all components facilitates the ability to operate with stable thermal conditions, thereby increasing the reliability of the performances themselves of the interferometric optical fiber gyroscope (IFOG) object of the present invention.

The dependent claims describe preferred variants of the invention, forming an integral part of the present description.

## Brief description of the Figures

Further objects and advantages of the present invention will become clear from the following detailed description of an example of its embodiment (and its variants) and from the annexed drawings given purely for explanatory and non-limiting purposes, in which:

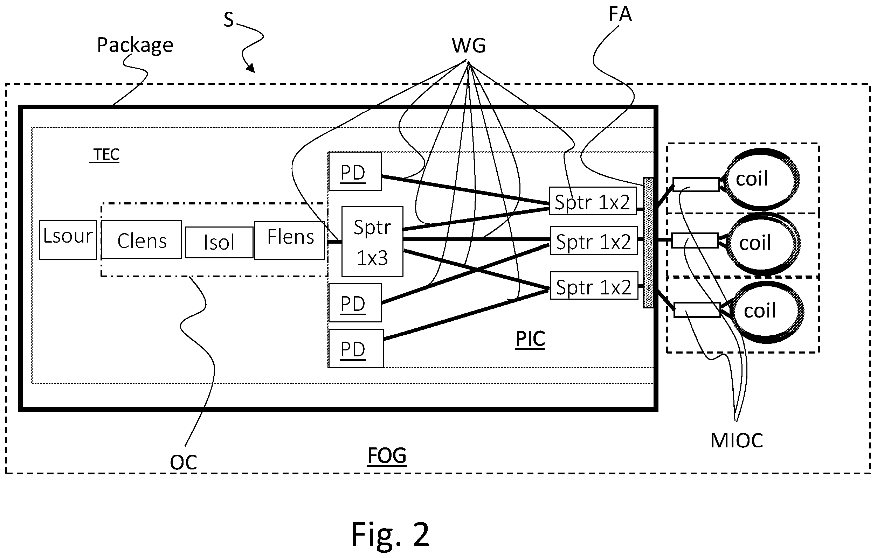

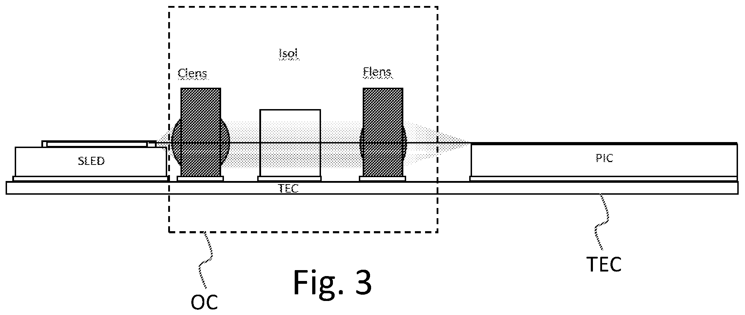

Figure 1 shows a schematic plan view of a device according to the prior art, modified so as to make a comparison of the prior art with the present invention; Figure 2 shows a schematic plan view of an example of a device according to the present invention ; Figure 3 shows a side view of the same example of the device of Figure 2.

The same reference numbers and letters in the Figures identify the same elements or components.
In the context of this description, the term "second" component does not imply the presence of a "first" component. These terms are in fact used as labels to improve clarity and should not be understood in a limiting way.
The elements and characteristics shown in the various preferred embodiments, including the drawings, can be combined with each other without however departing from the scope of the present application as described below.

## Detailed description of examples of embodiment

Figure 2 shows an example of embodiment of the FOG device object of the present invention.
The FOG device, object of the present invention, comprises

- a Lsour polarized light source of the SLED type, optically coupled with
- a WG waveguide by means of
- an OC optical coupling device arranged to couple the

Lsour source with the WG waveguide, which are interconnected by means of a PIC photonic integrated circuit (Photonic Integrated Circuit) on which the above components are formed/connected to realize a portion of a FOG fiber-optical gyroscope (Fiber Optic Gyroscope).
It is worth noting that the FOG gyroscope, in operating conditions, comprises the semi-finished S device and at least one MIOC, with a relative multi-turns coil, operatively connected to the device S.
The optical coupling device OC consists of the following components:

- a Clens collimating lens, which is coupled with

- an Isol optical isolator, which in turn is coupled with
- a Flens focusing lens which is coupled with the wave guide.

The SLED source is coupled to the Clens collimating lens, whereas the Flens focusing lens is coupled to the waveguide by creating an operational sequence of components, necessary to adapt the near-field mode of the SLED luminescent source to the near-field mode of the WG waveguide.
There are two possible versions of the OC optical coupling device: the first one provides an optical isolator with relative input and output lenses which collimate and focus, thus avoiding possible instability of the SLED caused by back-reflections, due to the fact that the optical isolator allows only the unidirectional propagation of the optical signal. An alternative to this solution is represented by the insertion of a mode-converter, achievable with a surface aspherical lens to reduce the aberrations, which is inserted between the SLED and the input to the integrated waveguide.
The WG waveguide comprises an optical input - input port - defined by a first MMI 1x3 splitter (beam splitter) and three second MMI 1x2 splitters operatively coupled with the first splitter.
The second MMI 1x2 splitters are configured to connect the first MMI 1x3 splitter with a relative MIOC and this latter with a relative hybridized or realized in the FOG-PIC PD photodiode.
The optical signal after passing through the MMI 1x3 is divided into three equal light beams and subsequently each of the three light beams is addressed to a respective MIOC. The second splitters divide the light beam returning from the MIOC by directing half of it to a relative PD photodiode.
It is evident that the second splitters propagate the light signals returning from the MIOC both towards the relative PD photodiode and back towards the same Lsour source. Especially when the intensity of the light signal is relevant, the isolator isolates the light source from these signals.
Preferably, the FOG gyroscope includes three MIOCs with three relative multi-turns optical fibers coils so as to form a triaxial gyroscope.
Therefore, an output and input port is defined in the PIC in order to couple the same PIC to at least one MIOC.
Each MIOC has two fiber outputs which are operatively connected to the opposite ends of a multi-turns fiber coil, and then the two optical signals are injected onto both ends of a coil, by running on it clockwise and counterclockwise. After passing through the detection coil, the waves in the clockwise and counterclockwise direction, recombine themselves in MIOC and the interference signal so generated is subsequently detected by the respective photodiode after its propagation up to the respective MMI 1x2 optical splitter.
In a rotary reference system, an event known as the Sagnac effect causes the effective optical path through the circuit to increase in one direction of travel in the coil and to decrease for the other one.

The resulting phase shift between the two optical components at the output is formulated as follows:

$$\varphi = \frac{2\pi RL}{\lambda c}\Omega$$

where R is the radius of the optical fiber coil, L is the total length of the fiber in the circuit, $\lambda$ is the wavelength of the vacuum of the source radiation, c is the speed of light and $\Omega$ is the rotation speed. The phase $\phi$ is known as the Sagnac phase shift. In order to achieve a high degree of accuracy, the two paths experienced by the two optical beams must be identical when the gyroscope is in a stationary, non-rotating reference system, that is, the system must show reciprocity. From the present description it is evident that the propagation of the light signals exiting the PIC takes place by means of an optical fiber, therefore for all the components described above as operationally interconnected this occurs by means of a suitable optical fiber.

The output of the MMI 1x2 is coupled to a Fiber Array - defining an output and input port being crossed by the light signal in both directions - with three channels made of polarization-maintaining optical fibers, these three fibers being joined to the input fiber of three MIOCs (Multifunctional Integrated Optical Circuit), one MIOC for each axis. Each MIOC has two fiber outputs which are spliced to the fiber coil outputs, so that the two optical signals are input signals of the optical fiber coil.

Preferably, the waveguide technology used to realize the device of the present invention is based on germanium-doped silicon base. The base material of the waveguide Ge:SiO2 and the coating layer are deposited and modeled. The manufacture is performed on silicon wafers with silicon oxide acting as a lower coating. The interferometer sensor defined by the PD photodiode is directly integrated on the chip, preferably, by means of a hybrid integration platform.

Therefore, each photodiode is coupled to a relative output port of the PIC.

With a dedicated process, developed for the integration of the PD, it is possible to create a cavity inside the chip housing the PD in the correct position, in order to align the waveguide with the sensitive area of the PD. The TEC, placed at the base of the chip, has preferably two functions: to achieve the thermal control by improving the thermal performance of the device and mechanically supporting all cited Lsour, OC, WG components.

Although the proposed structure is of multifunctional architecture, it is assembled through the automatic assembly line, and therefore it is economical in its implementation.

Preferably, the waveguide technology used to realize the device of the present invention is based on germanium-doped silicon, therefore, it is a passive waveguide, unlike the prior art in which the waveguide is active and therefore it is erbium-doped ($Er^{+3}$), which leads to an enormous saving. The structure of the waveguides inside the chip is obtained by manufacturing on a known silicon wafer, preferably with a silicon oxide layer (Bottom Cladding), upon which the Ge:SiO2 (core) is deposited and finally BPTEOS, acronym for boron-phosphor-silicate glass (top cladding).

The Bottom and the Cladding have the function of confinement of the light beam, whereas the core has the function of transmitting the light beam.

The waveguides made on the chip, indicated with WG in Fig. 2 are continuous transmission means which do not require fusion joints between them, but only couplings at the input and output of WG.

At the input, the coupling in the guide is made in air, i.e. there is no mechanical connection between the OC coupling device and the guide, whereas at the output the optical coupling to one, two or three waveguides is realized through the use of an FA, an acronym for Fiber array. This last component is known per se and includes as many channels as the axes which the complete FOG gyroscope is expected to have. For example, if the gyroscope is monoaxial, then FA includes only one channel, and vice versa, if the gyroscope is triaxial, FA includes three channels. The three-channel FA is a single rigid block with three v-grooves in which three polarization-maintaining fibers are housed, aligned and bonded.

The manufacturing process of the semi-finished product with hybridized photodiodes comprises the steps indicated below:

- forming the waveguides, according to methods known per se,
- dry etching the recesses for the photodiodes and coupling facets.

Inside the PIC, the three PD photodiodes are preferably hybridized directly on the chip so creating a cavity inside the chip to house the three PDs and couple them to the WG waveguides as indicated in Fig. 1. Further steps for optimizing the quality of the chip facets are preferably obtained through the following processing steps:

- CMP (Chemical Mechanical Polishing) and Dicing (thinning)
- Lapping.

After having manufactured the PIC and improved the quality of the input and output facets, the realization of the semi-finished product preferably consists of the following steps:

- Die ATTACH of TEC inside the package

- DIE ATTACH of PIC on TEC
- DIE ATTACH of SLED on TEC
- DIE ATTACH of PDs in the cavities of PIC
- Wire bonding
- DIE ATTACH of the optical isolator on TEC
- Active alignment and bonding of FA at the output of WG
- Active alignment and bonding on TEC of Clens and Flens lenses
- Fixing a lid to make a closed package.

The semi-finished product thus formed is, by fusion splicing, coupled to MIOC of each one of the one or two or three axes.

The number of optical components is low, so it is easy to debug, robust and with high reliability, in fact for assembling a complete triaxial FOG with the introduction of the present invention, it is possible to reduce the number of junctions in total fusion just to 9, in the case of a triaxial gyroscope:

- A joint between FA of PIC and MIOC (considering three axes if the number of joints becomes equal to 3),
- Two joints between MIOC and the output fibers of each coil (by considering three axes, the number of joints becomes equal to 6).

All in all, for assembling a triaxial optical fiber gyroscope with the semi-finished product, it is therefore necessary to make only 9 joints.

The present invention also finds application in the space field, and its simple architecture with a reduced number of components simplifies the space use thanks to the realization of an airtight packaging and to the use of metalized optical fiber. A completely airtight system can be realized by using an FA with metalized optical fiber.

For space applications it is also important to take into account the RIA (Attenuation Induced by Radiations) which depends on the wavelength and is greater than the shortest wavelength, so therefore the use of a SLED source of about 1550 nm, rather than of a 980 nm laser, leads to reduction of RIA limits.

The performance of FOG realized by means of the S device described in the present invention are also improved thanks to the stability of PER (Polarization Extinction Ratio) as the operating temperature of the system changes, since the light at the output of SLED is polarized, and the chip, FA, MIOC and the coils are all devices used to maintain the polarization. Implementation variants of the non-limiting example described are possible, without however departing from the scope of protection of the present invention, which is defined by claims.

From the above description the person skilled in the art is able to realize the object of the invention without introducing further construction details.

## Claims

1. A semi-finished product (S) for the realization of a gyroscope (FOG), comprising the following components

   - a super-luminescent diode-type polarized light source (Lsour) (SLED),
   - an optical medium, PIC, of the "photonic integrated circuit" type in which a group of waveguides (WG) is defined and in which two or three photodiodes (PD) are formed or hybridized
   - an optical coupling device (OC) arranged to couple the light source (Lsour) with the optical medium (PIC),
   - a single substrate (TEC) on which exclusively said components are attached, wherein said PIC includes
   - an input port intended to receive a light beam generated by said light source through said optical coupling device (OC),
   - at least two output&input ports, each output&input port intended to be coupled to a corresponding Multifunctional Integrated Optical Circuit, MIOC, at least two output ports operatively associated with a corresponding one of the two or three photodiodes (PD), Wherein the PIC includes
   - a first beam splitter (Sptr 1x2) and two second splitters (Sptr 1x2), wherein the first beam splitter defines said input port and is operatively associated with the two second beam splitters and each of the second beam splitters are arranged to define a corresponding one of said at least two output&input ports and a corresponding one of said at least two output ports; or
   - a first beam splitter (Sptr 1x3) and three second beam splitters (Sptr 1x2), wherein the first beam splitter defines said input port and is operatively associated with the three second beam splitters and each of the second beam splitters are arranged to define a corresponding one of said at least two output&input ports and a corresponding one of said at least two output ports.

2. A semi-finished product according to claim 1, wherein said single substrate (TEC) is configured so as to define a Thermo Electric Cooler, in order to guarantee a common temperature for all components of the semi-finished product (S) and wherein the semi-finished product further comprises a single package placed for enclosing and sealing the single substrate with said components and wherein said optical medium (PIC) comprises an optical interface, by means of a joint by fusion, at the input and output towards a MIOC (Multifunctional Integrated Optical Circuit).

3. Semi-finished product according to claim 1 or 2, wherein the group of waveguides and the optical coupling device (OC) are arranged in such a way to maintain unchanged a polarization state of the light beam generated by the light source (Lsour).

4. Semi-finished product according to any one of claims 1 - 3, wherein said single substrate is made of a ceramic material.

5. Semi-finished product according to any one of the preceding claims, wherein said SLED is capable of generating a light beam with a wavelength of about 1550 nm.

6. Semi-finished product according to any of the preceding claims, wherein said optical coupling device (OC) consists in the ordered sequence of the following components:

    - a collimating lens (Clens)
    - an optical isolator (Isol)
    - a focalizing lens (Flens)

mutually coupled in air, with the light source and with the optical medium (PIC).

7. Semi-finished product according to any one of the preceding claims, wherein said optical medium (PIC) is made either of germanium-doped silicon or of LNOI.

8. Gyroscope comprising a semi-finished product according to any one of the preceding claims and at least two MIOCs (Multifunctional integrated optical circuit) and a respective fiber-optic multi-turns coil (coil) and wherein said at least two MIOCs and said respective multi-turns coils are external with respect to said single package and are optically coupled with the semi-finished product by means of fiber-array fibers.

9. Gyroscope according to claim 8, wherein said fiber-array is metallized.

10. Gyroscope according to claim 8 or 9, wherein said at least one MIOC comprises means for beam dividing (Splitter), for polarizing it and modulating its phase.

11. Gyroscope according to any one of the claims 8 - 10, wherein said MIOC has a respective package, which is distinct and separated from said package of the semi-finished product.

12. Method of manufacturing a semi-finished product and related gyroscope of any of claims 1-11, the method comprising the following steps:

    - attachment, for example by Die Attach, of a substrate (TEC) inside an open package,
    - hanging, for example through Die Attach, of a PIC, in which waveguides (WG) and cavities for photo-diodes (PD) have been previously made, on the substrate (TEC) - attachment, for example through Die Attach, of the SLED on the substrate (TEC)
    - hanging, for example by means of Die Attach, of the photodiodes (PD) in the relative cavities of the PIC
    - Wire bonding of electrical contacts,
    - (optional) attachment, for example through Die Attach, of the optical isolator on the substrate (TEC)
    - Active alignment and bonding of Fiber Arrays (FA) to the output & input port of the PIC waveguide (WG),
    - Active alignment and gluing on the substrate (TEC) of the optical coupling device (OC) and at the end of the previous steps:
    - Fastening a lid to create a closed package.

**Patentansprüche**

1. Halbfertigprodukt (S) zur Realisierung eines Gyroskops (FOG), bestehend aus folgenden Komponenten:

    - einer polarisierten Lichtquelle vom Typ Superlumineszenz-Diode (Lsour), (SLED),
    - einem optischen Medium (PIC) vom Typ "photonischer integrierter Schaltkreis", in dem eine Gruppe von Wellenleitern (WG) definiert ist und in dem zwei oder drei Fotodioden (PD) ausgebildet oder hybridisiert sind,
    - einer optischen Kopplungsvorrichtung (OC) zur Kopplung der Lichtquelle (Lsour) mit dem optischen Medium (PIC),
    - einem einzelnen Substrat (TEC), auf dem die Komponenten ausschließlich befestigt sind, wobei das PIC Folgendes umfasst:
    - eine Eingangsöffnung zum Empfang eines von der Lichtquelle mittels der optischen Kopplungsvorrichtung (OC) erzeugten Lichtstrahls,
    - mindestens zwei Ausgangs- und Eingangsöffnungen, wobei jede der Ausgangs-und Eingangsöffnungen jeweils zur Kopplung mit einem entsprechenden multifunktionalen optischen integrierten Schaltkreis (MIOC) vorgesehen sind, sowie mindestens zwei Ausgangsöffnungen, die jeweils mit einer von zwei oder drei Fotodioden (PD) verbunden sind,

wobei das PIC Folgendes umfasst:

    - einen ersten Strahlteiler (Sptr 1x2) und
    - zwei zweite Strahlteiler (Sptr 1x2), wobei der erste Strahlteiler die Eingangsöffnung definiert und mit den beiden zweiten Strahlteilern funktional verbunden ist, wobei jeder der zweiten Strahlteiler ist so angeordnet, dass er jeweils eine entsprechende von mindestens zwei Eingangs- und Ausgangsöffnungen sowie eine entsprechende von mindestens zwei Ausgangsöffnungen definiert, oder:

- einen ersten Strahlteiler (Sptr 1x3) und drei zweite Strahlteiler (Sptr 1x2), wobei der erste Strahlteiler die Eingangsöffnung definiert und mit den drei zweiten Strahlteilern funktional verbunden ist, wobei jeder der zweiten Strahlteiler ist so angeordnet, dass er jeweils eine entsprechende von mindestens zwei Eingangs- und Ausgangsöffnungen sowie eine entsprechende von mindestens zwei Ausgangsöffnungen definiert.

2. Halbfertigprodukt nach Anspruch 1, wobei das einzelne Substrat (TEC) ist so konfiguriert, dass er als thermoelektrischer Kühler fungiert, um eine einheitliche Temperatur für alle Komponenten des Halbfertigprodukts (S) zu gewährleisten, und wobei das Halbfertigprodukt ferner ein einziges Gehäuse umfasst, das das die Komponenten enthaltende einzelne Substrat umschließt und abdichtet, und wobei das optische Medium (PIC) eine optische Schnittstelle mittels einer Schmelzversiegelung am Ein- und Auslass eines MIOC (Multifunktionalen Integrierten Optischen Schaltkreises) aufweist.

3. Halbfertigprodukt nach Anspruch 1 oder 2, wobei die Wellenleitergruppe und die optische Kopplungseinrichtung (OC) so angeordnet sind, dass ein Polarisationszustand des von der Lichtquelle (Lsour) erzeugten Lichtstrahls unverändert bleibt.

4. Halbfertigprodukt nach einem der Ansprüche 1 bis 3, wobei das einzelne Substrat aus einem keramischen Material besteht.

5. Halbfertigprodukt nach einem der vorhergehenden Ansprüche, wobei die SLED einen Lichtstrahl mit einer Wellenlänge von etwa 1550 nm erzeugen kann.

6. Halbfertigprodukt nach einem der vorhergehenden Ansprüche, wobei die optische Kopplungsvorrichtung (OC) aus der folgenden geordneten Abfolge von Komponenten besteht:

- einer Kollimatorlinse (Clens)
- einem optischen Isolator (Isol)
- einer Fokussierlinse (Flens), die in Luft mit der Lichtquelle und dem optischen Medium (PIC) gekoppelt ist.

7. Halbfertigprodukt nach einem der vorhergehenden Ansprüche, wobei das optische Medium (PIC) entweder aus germanim-dotiertem Silizium oder LNOI besteht.

8. Gyroskop, umfassend ein Halbfertigprodukt nach einem der vorhergehenden Ansprüche und mindestens zwei MIOCs (multifunktionale optische integrierte Schaltkreise) sowie eine zugehörige Mehrwindungs-Lichtwellenleiterspule (Spule), wobei die mindestens zwei MIOCs und die zugehörigen Mehrwindungsspulen außerhalb des Gehäuses angeordnet und mittels Fasergruppen optisch mit dem Halbfertigprodukt gekoppelt sind.

9. Gyroskop nach Anspruch 8, wobei die Fasergruppe metallisiert ist.

10. Gyroskop nach Anspruch 8 oder 9, wobei der mindestens eine MIOC eine Strahlteiler-Einrichtung (Splitter) zur Polarisation und Phasenmodulation aufweist.

11. Gyroskop nach einem der Ansprüche 8 bis 10, wobei der MIOC ein eigenes Gehäuse besitzt, das vom Gehäuse des Halbfertigprodukts getrennt ist.

12. Verfahren zur Herstellung eines Halbfertigprodukts und eines zugehörigen Gyroskops nach einem der Ansprüche 1 bis 11, wobei das Verfahren die folgenden Schritte umfasst:

- Befestigung eines Substrats (TEC) in einem offenen Gehäuse, beispielsweise mittels Die Attach;
- Aufhängen eines PIC, in dem zuvor Wellenleiter (WG) und Fotodioden-Resonatoren (PD) ausgebildet wurden, beispielsweise mittels Die Attach, auf das Substrat (TEC);
- Befestigung der SLED auf das Substrat (TEC), beispielsweise mittels Die Attach;
- Aufhängen der Fotodioden (PD) in die entsprechenden Resonatoren des PIC, beispielsweise mittels Die Attach;
- Verbinden der elektrischen Kontakte mit Draht;
- (optional) Befestigen des optischen Isolators auf das Substrat (TEC), beispielsweise mittels Die Attach;
- Aktives Ausrichten und Verbinden des Fasergruppe (FA) mit den Ausgangs- und Eingangsöffnungen des Wellenleitersignals (WG) des PIC;
- Aktives Ausrichten und Verkleben der optischen Kopplungsvorrichtung (OC) mit dem Substrat (TEC) und am Ende der vorherigen Schritte:
- Befestigung eines Deckels, um eine geschlossene Verpackung zu erhalten.

**Revendications**

1.  Produit semi-fini (S) pour la réalisation d'un gyroscope (FOG), comprenant les composants suivants

    - une source de lumière polarisée de type diode super-luminescente (Lsour) (SLED),
    - un milieu optique (PIC) de type « circuit intégré photonique » dans lequel un groupe de guides d'ondes (WG) est défini et dans lequel deux ou trois photodiodes (PD) est formées ou hybridées
    - un dispositif de couplage optique (OC) agencé pour coupler la source lumineuse (Lsour) avec le milieu optique (PIC),
    - un substrat unique (TEC) sur lequel sont exclusivement fixés lesdits composants, dans lequel ledit PIC comprend
    - une ouverture d'entrée prévue pour recevoir un faisceau de lumière généré par ladite source de lumière au moyen dudit dispositif de couplage optique (OC),
    - au moins deux ouverture de sortie et d'entrée, chacune ouverture de sortie et d'entrée étant prévue pour être couplée à un correspondant circuit optique intégré multi-functional (MIOC), au moins deux ouvertures de sortie, associées opérationnellement chacune à un de deux ou trois photodiodes (PD),

    dans lequel le PIC comprend

    - un premier séparateur de faisceau (Sptr 1x2), et
    - deux deuxièmes séparateurs (Sptr 1x2), dans lequel le premier séparateur de faisceau définit ladite ouverture d'entrée et est associé opérationnellement avec les deux deuxièmes séparateurs de faisceau, chacun des deuxièmes séparateurs de faisceau étant agencés pour définir une correspondante desdites au moins deux ouvertures de sortie et d'entrée et une correspondante desdites au moins deux ouvertures de sortie, ou
    - un premier séparateur de faisceau (Sptr 1x3) et trois deuxièmes séparateurs de faisceau (Sptr 1x2), dans lequel le premier séparateur de faisceau définit ladite ouverture d'entrée et est associé opérationnellement avec les trois deuxièmes séparateurs de faisceau, et chacun des deuxièmes séparateurs de faisceau étant agencé pour définir une correspondante desdites au moins deux ouvertures de sortie et d'entrée et une correspondante desdites au moins deux ouvertures de sortie.

2.  Produit semi-fini selon la revendication 1, dans lequel ledit substrat unique (TEC) est configuré de manière à définir un refroidisseur thermoélectrique, afin de garantir une température commune à tous les composants du produit semi-fini (S), et dans lequel le produit semi-fini comprend en outre un boîtier unique agencé pour enfermer et sceller le substrat unique contenant lesdits composants, et dans lequel ledit milieu optique (PIC) comprend une interface optique, au moyen d'un joint par fusion, à l'entrée et à la sortie vers un MIOC (Circuit Optique Intégré Multifonctionnel).

3.  Produit semi-fini selon la revendication 1 ou 2, dans lequel le groupe de guides d'ondes et le dispositif de couplage optique (OC) sont agencés de manière à maintenir inchangé un état de polarisation du faisceau lumineux généré par la source lumineuse (Lsour).

4.  Produit semi-fini selon l'une quelconque des revendications 1 à 3, dans lequel ledit substrat unique est constitué d'un matériau céramique.

5.  Produit semi-fini selon l'une quelconque des revendications précédentes, dans lequel ledit SLED est capable de générer un faisceau lumineux d'une longueur d'onde d'environ 1550 nm.

6.  Produit semi-fini selon l'une quelconque des revendications précédentes, dans lequel ledit dispositif de couplage optique (OC) consiste en la séquence ordonnée des composants suivants :

    - une lentille collimatrice (Clens)
    - un isolateur optique (Isol)
    - une lentille focalisante (Flens) couplée mutuellement dans l'air avec la source lumineuse et avec le milieu optique (PIC).

7.  Produit semi-fini selon l'une quelconque des revendications précédentes, dans lequel ledit milieu optique (PIC) est constitué soit de silicium dopé au germanium, soit de LNOI.

8.  Gyroscope comprenant un produit semi-fini selon l'une quelconque des revendications précédentes et au moins un MIOC (circuit optique intégré multifonctionnel) et une bobine multi-spires à fibre optique respective (bobine), dans lequel lesdits au moins deux MIOC et lesdites bobines multi-spires respectives sont externes par rapport audit boîtier unique et sont couplés optiquement au produit semi-fini au moyen de fibres en réseau.

9.  Gyroscope selon la revendication 8, dans lequel ledit groupe de fibres est métallisé.

10. Gyroscope selon la revendication 8 ou 9, dans lequel ledit au moins un MIOC comprend des moyens de division de faisceau (séparateur), pour le polariser et moduler sa phase.

11. Gyroscope selon l'une des revendications 8-10, dans lequel ledit MIOC possède un boîtier respectif, qui est distinct et séparé dudit boîtier du produit semi-fini.

12. Procédé de fabrication d'un produit semi-fini et d'un gyroscope associé, selon l'une quelconque des revendications 1-11, le procédé comprenant les étapes suivantes :

    - fixation, par exemple par Die Attach, d'un substrat (TEC) à l'intérieur d'un boîtier ouvert,
    - suspension, par exemple par Die Attach, d'un PIC, dans lequel des guides d'ondes (WG) et des cavités pour photodiodes (PD) ont été préalablement réalisés, sur le substrat (TEC)
    - fixation, par exemple par Die Attach, du SLED sur le substrat (TEC),
    - suspension, par exemple au moyen du Die Attach, des photodiodes (PD) dans les cavités correspondantes du PIC
    - liaison par fil des contacts électriques,
    - (optionnel) fixation, par exemple par Die Attach, de l'isolateur optique sur le substrat (TEC)
    - alignement actif et liaison du réseau de fibres (FA) à l'ouverture de sortie et d'entrée du guide d'ondes (WG) du PIC,
    - alignement actif et collage sur le substrat (TEC) du dispositif de couplage optique (OC) et à la fin des étapes précédentes :
    - fixation d'un couvercle pour créer un emballage fermé.

Fig. 1 (State of the art)

Fig. 2

EP 4 121 717 B1

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080291459 A1
- US 2018259337 A